# EUROPEAN PATENT SPECIFICATION

(11) **EP 1 832 782 B1**
(45) Date of publication and mention of the grant of the patent: **04.03.2009**
(21) Application number: 05805977.5
(22) Date of filing: 10.11.2005
(51) Int. Cl.: F16H 57/08, F16H 1/28

(54) **PLANETARY GEAR DEVICE**
PLANETENGETRIEBEVORRICHTUNG
DISPOSITIF DE TRAIN PLANETAIRE

(30) Priority: 27.12.2004 JP 2004375361
(43) Date of publication of application: 12.09.2007
(73) Proprietor: Daihatsu Motor Co., Ltd., Ikeda-shi, Osaka 563-8651 (JP)
(72) Inventor: Shimamoto, Masao c/o Daihatsu Motor Co., Ltd., Ikeda-shi, Osaka 5638651 (JP); Tanaka, Masahiro c/o Daihatsu Motor Co., Ltd., Ikeda-shi, Osaka 5638651 (JP); Kikuwa, Koutarou c/o Daihatsu Motor Co., Ltd., Ikeda-shi, Osaka 5638651 (JP)
(74) Representative: Schoppe, Fritz
(86) International application number: PCT/JP2005/020585
(87) International publication number: WO 2006/070535

(56) References cited:
- EP-A- 1 094 249
- DE-A1- 19 536 027
- JP-A- 2004 144 138
- JP-A- 2004 308 814
- JP-U- 6 012 862
- US-A1- 2003 087 720

## Description

### Field of the Invention

The present invention relates to a planetary gear device, and in particular to a coupling structure of a sun gear to a carrier, according to the preamble of claim 1.

### Background of the Invention

JP 2002-327828 A discloses a belt-type continuously variable ratio-change unit having a single-pinion type planetary gear device. Fig. 5 illustrates a structure of the planetary gear device as described in JP 2002-327828 A. A planetary gear device 100 has a sun gear 101 which is coupled to an input shaft 102 by spline connection, a carrier 105, and a pinion gear 103 which is meshed with the sun gear 101 and is rotatably supported by the carrier 105 via a pinion shaft 104. A disc-shaped carrier plate 106 is fixed in front of the carrier 105. The inner peripheral portion of the carrier plate 106 is rotatably supported by the input shaft 102 via a bushing 117, while the outer peripheral portion thereof is formed to be a brake-hub 106a of a reverse brake 107. A clutch hub 106b of a direct-coupling clutch 108 is fixed on the intermediate portion of the carrier plate 106. A hydraulic piston 109 for engaging clutch discs of the direct-coupling clutch 108 is arranged inside of a clutch drum 110, and the end of the inner cylindrical portion of the clutch drum 110 is coupled to the input shaft 102. A hydraulic piston 111 for clamping brake discs of the reverse brake 107 is received in a concave portion 113, which is formed in an inner wall of a transmission casing 112. A ring gear 114 meshing with the pinion gear 103 has an inner peripheral portion, which is coupled to an inner toothed wall of a pulley axis 116 of a driver pulley 115 by spline engagement.

In the above described arrangements, the sun gear 101 is coupled to the input shaft 102 by spline connection, and the carrier 105 (106) is rotatably supported on the input shaft 102 via the bushing 117. Due to the looseness of the spline connection and of the bushing 117 as well as to the positional inaccuracy of the center of each component, relative position of the sun gear 101 to the carrier 106 becomes unstable. Further, due to the intermeshing reaction force caused between the sun gear and the pinion gear, centering dislocation and tilting of those components apt to occur in response to the looseness. As a result, the intermeshing condition between the sun gear 101 and the pinion gear 103, or that between the pinion gear 103 and the ring gear 114 become worse, leading to a disadvantage that the gears tend to become noisy and worn-out.

JP 2004-144 138 A discloses a planetary gear device whose sun gear is coupled to an input shaft by spline connection and whose carrier is held on an outer peripheral portion of the sun gear via a ball bearing. In this case, the sun gear and the carrier are coupled via the ball bearing so that the relative position of the sun gear to the carrier in the radial direction becomes stable, enabling to eliminate the looseness. However, because the center of the ball bearing and the intermeshing center of the pinion gear are positioned away from each other in the axial direction, the intermeshing reaction force generated between the pinion gear and the sun gear tends to cause the tilting of the carrier, leading to the gear noise and abrasion.

The closest prior art document JP 2004-308814 A discloses a continuously variable transmission with improved lubrication in a radial needle bearing for supporting a planetary gear, while preventing fretting friction in an abutment part between a connecting plate of a carrier and an input side disc at a high level. The lubricating oil is fed to the abutment part through second notches formed in the inner peripheral edge of a thrust washer and a notch formed in the inner peripheral edge of a circular hole of the connecting plate. With this structure, the quantity of the lubricating oil passing through the radial needle bearing is secured and while a necessary quantity of the lubricating oil can be fed to the abutment part.

### Summary of the invention

Accordingly, an object of the present invention is to provide a planetary gear device, whose sun gear and carrier are coupled stably, so that the carrier can be prevented from tilting to effectively reduce the gear noise and abrasion.
This object is achieved by a planetary gear device of claim 1.

In order to achieve the above-mentioned object, the present invention provides a planetary gear device comprising a rotational shaft, a sun gear spline-connected to the rotational shaft, a carrier rotatably supported on the rotational shaft, pinion gears supported by the carrier and a ring gear meshing with the pinion gears, wherein a first bearing mounting portion extending in the radial inner side of the pinion gears is formed integrally with the sun gear, a second bearing mounting portion extending in the radial inner side of the pinion gears and opposing to the first bearing mounting portion in the radial direction is formed integrally with the carrier, and a radial bearing is installed between the first bearing mounting portion and the second bearing mounting portion so as to be positioned in the radial inner side of the pinion gears.

In the present invention, the first and the second bearing mounting portions, both of which extend in the radial inner side of the pinion gears, are formed integrally with the sun gear and the carrier respectively, in such a way that the radial bearing is installed therebetween. By this construction, the relative position of the sun gear to the position of the carrier becomes stable in radial direction, thereby enabling to eliminate the looseness. Further, because the radial bearing is arranged radially inside of the pinion gear, the intermeshing reacting force caused between the sun gear and the pinion gear hardly works as the moment to the carrier, thereby suppressing the tilting of the carrier. As a result, the gear noise and the gear abrasion can be effectively reduced. Although the radial bearing is arranged radially inside of the pinion gear, the center of the radial bearing needs not precisely correspond to the center of the pinion gear in the axial direction, so long as the radial bearing and the pinion gear are positioned to overlap each other, at least partially, in the axial direction. The radial bearing in the present invention includes not only a rolling bearing such as a ball bearing or a roller bearing, but also a sliding bearing such as a bushing.

The second bearing-mounting portion of the carrier may preferably extend axially along the outer periphery of the rotational shaft, and a bearing means may preferably be provided between the inner periphery of the second bearing mounting portion of the carrier and the outer periphery of the rotational shaft. Moreover, the radial bearing may preferably be a ball bearing, which is installed between the outer periphery of the second bearing mounting portion of the carrier and the inner periphery of the first bearing-mounting portion of the sun gear. The bearing mounting portion of the carrier can be arranged radially outside of the bearing mounting portion of the sun gear, and a ball bearing can be mounted between the inner periphery of the bearing mounting portion of the carrier and the outer periphery of the bearing mounting portion of the sun gear. However, in this case, the portion of the carrier supported by the rotational shaft is separated from the bearing mounting portion of the carrier in the axial direction, so that the carrier supported by the rotational shaft may become less stable. On the contrary, when the inner periphery of the bearing mounting portion of the carrier is supported on the rotational shaft via the bearing means, and the ball bearing is mounted on the outer periphery of the bearing mounting portion of the carrier, the bush and the ball bearing can be separately arranged on the inside and outside of the bearing mounting portion respectively. Therefore, the portion of the carrier supported by the rotational shaft can be elongated axially, resulting that the stability of the carrier becomes higher. Because the ball bearing is operative to support the thrust force as well as the radial load, there is no need to provide additional thrust bearing between the sun gear and the carrier. As to the bearing means provided between the carrier and the rotational shaft, a sliding bearing such as a bushing as well as a rolling bearing such as a ball bearing or a roller bearing can be used.

As mentioned above, the radial bearing and the pinion gear should be positioned to overlap each other, at least partially, in the axial direction. Further, the center of the radial bearing may preferably be located within the axial length of the pinion gear, so that the moment to act on the carrier caused by the intermeshing reaction force of the gears can be reduced. Furthermore, the ball bearing as a whole may preferably be located within the length of the pinion gear, so that the moment to act on the carrier caused by the intermeshing reaction force of the gears can be further reduced and the carrier can be prevented from tilting.

The center of the radial bearing may substantially be positioned corresponding to the intermeshing center of the pinion gear in axial direction. In such a case that the center of the bearing substantially is positioned corresponding to the intermeshing center of the pinion gear in axial direction, the moment to act on the carrier caused by the intermeshing reaction force of the sun gear and the pinion gear can be minimized so that the carrier can be prevented from tilting.

The sun gear may preferably include the first bearing mounting portion at one axial end portion thereof, a clutch hub for supporting inner peripheral portions of clutch discs at the other axial end portion thereof, and an inner splined portion for engaging an outer splined portion of the rotational shaft at its intermediate portion. In the case where multiple disc clutch is mounted between the sun gear and another rotary member, by forming the clutch hub at the other axial end portion of the sun gear, the multiple disc clutch can be constructed in a compact manner. Although the sun gear may possibly be forced to tilt when the multiple disc clutch is engaged or disengaged, the sun gear can be prevented from tilting by spline-connecting the intermediate portion thereof to the rotational shaft and by forming the first bearing mounting portion at an axial end portion thereof, enabling to reduce the gear noise and abrasion.

### Effect of the Invention

As mentioned above, because the sun gear and the carrier of the present invention have bearing mounting portions formed integrally therewith respectively and the radial bearing is installed between these bearing mounting portions, the looseness between the sun gear and the carrier can be eliminated. Further, because the radial bearing is arranged radially inside of the pinion gear, intermeshing reaction force caused between the sun gear and the pinion gear hardly works as the moment to the carrier, thereby preventing the carrier from tilting. As a result, the gear noise and the abrasion can be effectively reduced.

### Brief Description of the Drawings

Fig.1 is an expanded sectional view of a continuously variable transmission including a planetary gear device according to an embodiment of the present invention;
Fig.2 is a skeleton diagram of the continuously variable transmission as shown in Fig. 1;
Fig.3 is a detailed sectional view of a forward backward changeover device for the continuously variable transmission as shown in Fig. 1;
Fig. 4 is a sectional view of a principal part of the planetary gear device as shown in Fig. 3; and
Fig. 5 is a sectional view of a forward backward changeover device for a continuously variable transmission according to the prior arts.

### DESCRIPTION OF THE PREFERRED EMBODIMENTS

The preferred embodiments of the present invention will be described with reference to the accompanying drawings.

### [Embodiment 1]

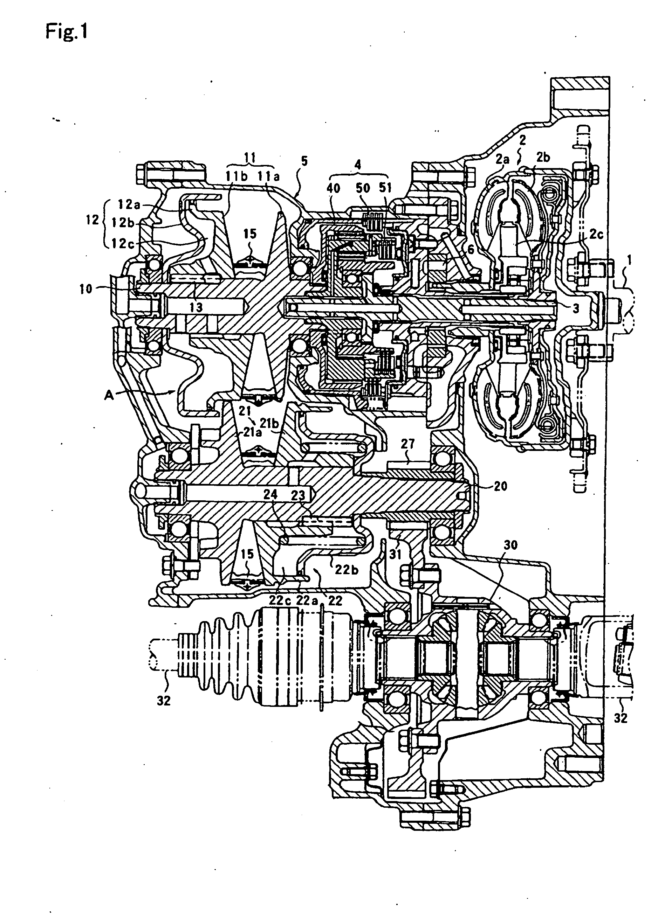

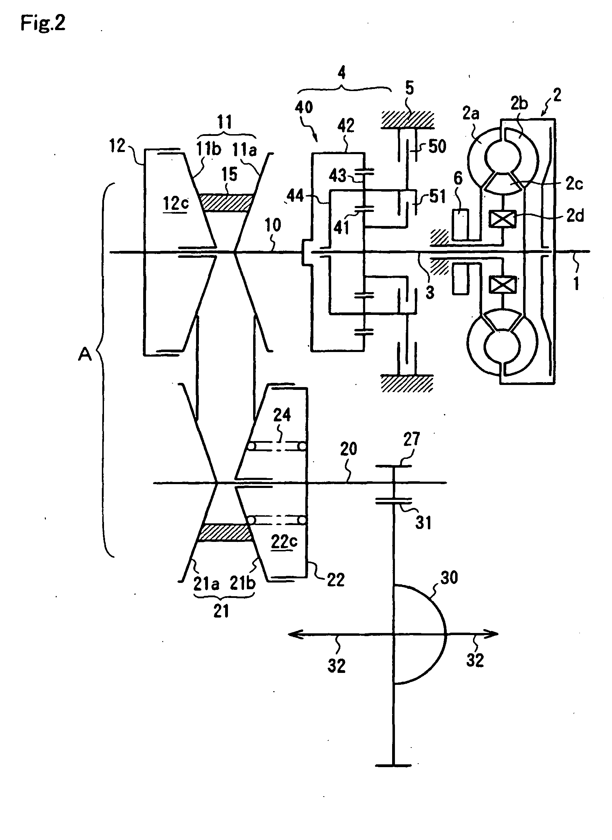

Figs. 1 to 4 show a continuously variable transmission including a planetary gear device according to the present invention. The continuously variable transmission according to this embodiment is employed in a vehicle having a transversely mounted FF (front engine-front drive) system. It generally comprises an input shaft 3 driven by an engine output shaft 1 via a torque converter 2, a forward backward changeover device 4 for changing the rotation of the input shaft 3 to transmit it to a driver shaft 10, a continuously variable ratio-change unit A having a driver pulley 11 and a driven pulley 21 together with an endless V-belt 15 running around both pulleys, and a differential gear unit 30 for transmitting the driving torque at the driven shaft 20 onto output shafts 32. The input shaft 3 and the driver shaft 10 are aligned coaxially, whereas the driven shaft 20 and the output shafts 32 of the differential unit 30 are arranged non-coaxially, but in parallel to the input shaft 3. Accordingly, this continuously variable transmission has a triaxial structure as a whole. The V-belt 15 used in this embodiment is a known metallic belt including a pair of endless tension members and a number of blocks supported thereon.

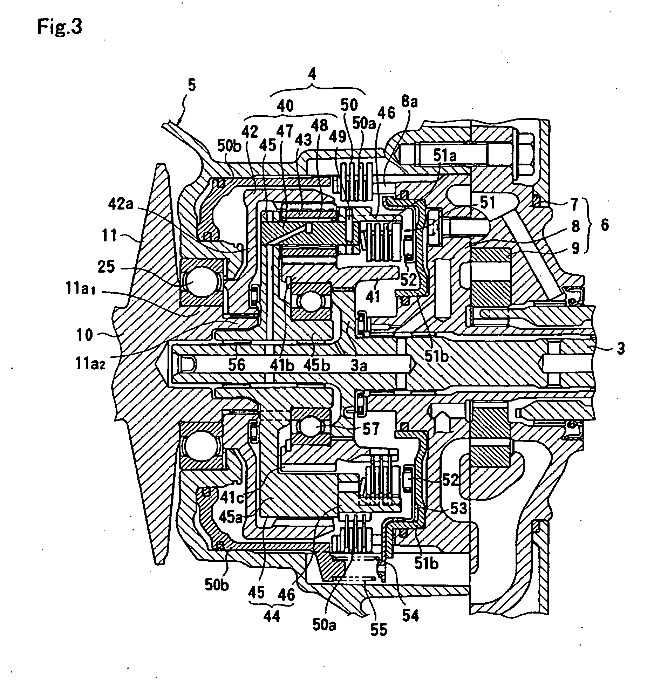

Each component of the continuously variable transmission is enclosed within a transmission casing 5. An oil pump 6 is arranged between the torque converter 2 and the forward backward changeover device 4. As shown in Fig. 3, this oil pump 6 includes a pump body 7 fixed to the transmission casing 5, a pump cover 8 fixed with respect to the pump body 7, and a pump gear 9 arranged between the pump body 7 and the pump cover 8. The pump gear 9 is driven by a pump impeller 2a of the torque converter 2. A turbine-runner 2b of the torque converter 2 is coupled to the input shaft 3, whereas a stator 2c is supported by the pump cover 8 via a one-way clutch 2d.

As shown in Fig. 3, the forward backward changeover device 4 includes a planetary gear device 40, a reverse brake 50 and a direct-coupling clutch 51. A sun gear 41 of the planetary gear device 40 is coupled to the input shaft 3 serving as an input-side rotational member (rotational shaft), whereas a ring gear 42 is coupled to a fixed sheave 11a of the driver pulley 11 serving as an output-side rotational member. This planetary gear device 40 is constructed as a single-pinion type, in which the reverse brake 50 is arranged between a carrier 44 supporting a pinion gear 43, and the transmission casing 5. The direct-coupling clutch 51 is arranged between the carrier 44 and the sun gear 41. When the direct-coupling clutch 51 is disengaged and the reverse brake 50 is applied, the rotation of the input shaft 3 is transmitted to the driver shaft 10 in reversed and decelerated manner so as to come into forward driving state. On the contrary, when the reverse brake 50 is released and the direct-coupling clutch 51 is engaged, the carrier 44 and the sun gear 41 of the planetary gear device 40 rotate integrally. Thus, the input shaft 3 and the driver shaft 10 are directly coupled so as to come into backward driving state. The structure of the forward backward changeover device 4 will be explained more specifically later.

The driver pulley 11 of the continuously variable ratio-change unit A includes the fixed sheave 11a formed integrally with the driver shaft (pulley shaft) 10, a movable sheave 11b supported on the driver shaft 10 via a roller spline 13 in such a way that it can freely slide with respect to the driver shaft 10 in the axial direction while it can also rotate integrally with the driver shaft 10, and a hydraulic servo 12 formed behind the movable sheave 11b. The movable sheave 11b has a piston portion 12a extending backwardly, which is formed integrally with the movable sheave 11b at its outer periphery. The outer periphery of this piston portion 12a slidably contacts with an inner surface of a cylinder member 12b fixed to the driver shaft 10. The hydraulic servo 12 has an operating oil chamber 12c formed between the movable sheave 11b and the cylinder member 12b, such that the ratio changing operation is performed by controlling the oil pressure fed into this oil chamber 12c.

The driven pulley 21 includes a fixed sheave 21a formed integrally with the driven shaft (pulley shaft) 20, a movable sheave 21b supported on the driven shaft 20 via a roller spline 23 in such a way that it can freely slide with respect to the driven shaft 20 in the axial direction while it can also rotate integrally with the driven shaft 20, and a hydraulic servo 22 formed behind the movable sheave 21b. The structure of this roller spline 23 is similar to that of the roller spline 13 of the driver pulley 11. The movable sheave 21b has a cylindrical portion 22a extending backwardly, which is formed integrally with the movable sheave 21b at its outer periphery. An inner surface of this cylindrical portion 22a slidably contacts with a piston member 22b fixed to the driven shaft 20. The hydraulic servo 22 has an operating oil chamber 22c formed between the movable sheave 21b and the piston member 22b, such that the axial force loaded on the belt for transmitting torque is adjusted by controlling the oil pressure fed into this oil chamber 22c. Further, a spring 24 for producing the initial axial force is arranged is this oil chamber 22c.

At one end of the driven shaft 20, which extends toward the engine, an output gear 27 is fixed. This output gear 27 meshes with a ring gear 31 of the differential gear unit 30 such that the torque is transmitted from the differential gear unit 30 to the output shafts 32, which extend both in left and right sides from the differential gear unit 30 to connect with driving wheels.

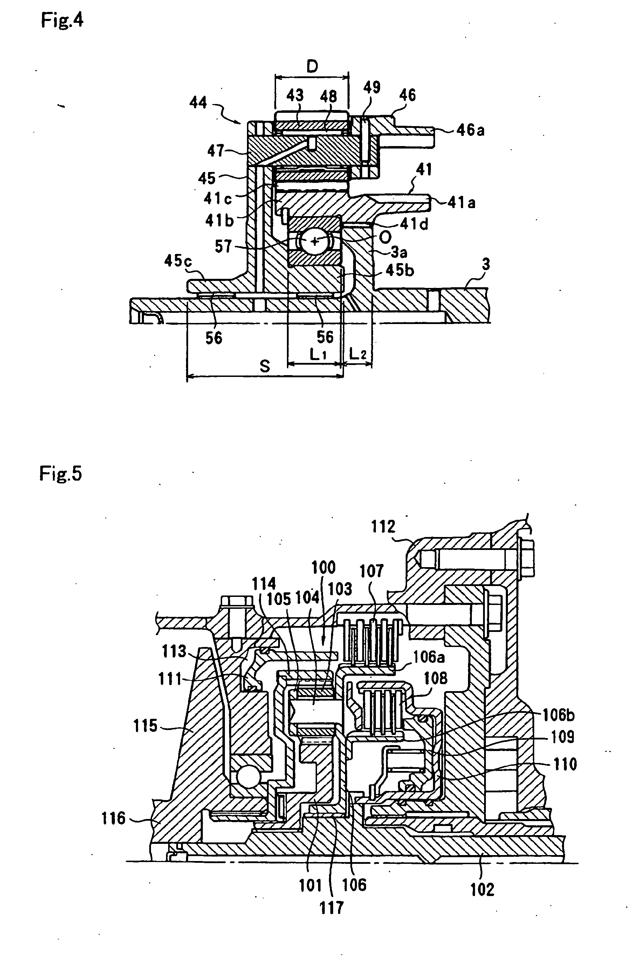

The specific structure of the forward backward changeover device 4 will be explained in detail herebelow referring to Figs. 3 and 4. The carrier 44 includes a disc-shaped carrier flange 45 and a ring-shaped carrier rim 46. The carrier flange 45 has an inner peripheral portion, which extends radially inwardly between a sun gear 41 and a ring gear 42 and is rotatably supported by the input shaft 3 via bushings 56. The inner peripheral portion of the carrier flange 45 extends axially both in forward and backward directions, such that the forward extending portion (toward the engine) of the inner peripheral portion serves as a bearing mounting portion 45b, whereas the backward extending portion thereof serves as a shaft-surrounding portion 45c. This inner peripheral portion of the carrier flange 45, including the bearing mounting portion 45b and the shaft-surrounding portion 45c, has an axial length S, which is equal to or longer than the axial length of the pinion axis 47 (see Fig. 4). Accordingly, the plurality of bushing 56 can be installed into a clearance between this inner peripheral portion of the carrier flange 45 extending axially and the input shaft 3, so that the carrier flange 45 can be prevented from tilting with respect to the input shaft 3. The carrier flange 45 also has a plurality of (six in this embodiment) pillar portions 45a formed integrally therewith, which project axially toward the carrier rim 46. The pinion gears 43 are arranged in the spaces defined between these pillar portions 45a. The ends of the pillar portions 45a and the carrier rim 46 are diffusion bonded, such that the carrier flange 45 and the carrier rim 46 are fixed integrally. Instead, these members may also be fixed by welding, brazing or screw tightening.

The carrier flange 45 and the carrier rim 46 are connected via a pinion shaft 47, which supports the pinion gear 43. Further, a needle bearing 48 is arranged between the inner cylindrical surface of the pinion gear 43 and the outer cylindrical surface of the pinion shaft 47, such that the pinion gear 43 is rotatable with respect to the pinion shaft 47. One end of the pinion shaft 47 is inserted into the carrier rim 46 to be fixed thereto by means of a roller pin 49 that is press fitted into the carrier rim 46 from outside in the radial direction.

The pinion gear 43 meshes with the ring gear 42. The ring gear 42 has a flange portion 42a, integrally formed at one axial end thereof, which extends radially inwardly and has inner toothed wall at its inner end. The fixed sheave 11a, which is arranged coaxially with the input shaft 3, has a boss portion 11a₁ extending toward the ring gear 42. The outer surface of this boss portion 11a₁ is supported by the transmission casing 5 via a ball bearing 25. The boss portion 11a₁ has an elongated portion 11a₂, which axially extends in parallel with the input shaft 3. This elongated portion 11a₂ has an outer toothed wall to engage the inner toothed wall of the flange portion 42a of the ring gear 42 by spline connection. In this way, because the boss portion 11a₁ of the fixed sheave 11 is supported by the ball bearing 25, the fixed sheave 11 is supported with improved accuracy. Further, because the inner toothed wall of the flange portion 42a of the ring gear 42 is spline connected with the outer toothed wall of the elongated portion 11a₂ formed near the boss portion 11a₁, which is supported by the ball bearing 25, the ring gear 42 is also positioned with improved accuracy. As a result, the gear noise and abrasion can be suppressed. The flange portion 42a should not necessarily be formed integrally with the ring gear 42, but a separate flange portion 42a could be fixed to the ring gear 42.

The carrier rim 46 has a cylindrical portion 46a formed integrally therewith, which projects forwardly (toward the engine) in the axial direction. This cylindrical portion 46a has an inner toothed wall to engage outer peripheral portions of clutch discs 51a of the direct-coupling clutch 51 by spline connection. Further, the carrier rim 46 has an outer toothed wall to engage inner peripheral portions of brake discs 50a of the reverse brake 50 by spline connection. In this way, the carrier rim 46 serves both as a brake hub of the reverse brake 50 and as a clutch drum of the direct-coupling clutch 51.

A piston 50b of the reverse brake 50 is disposed in the inner wall of the transmission casing 5, such that the piston 50b is actuated in response to the oil pressure fed into the space between the piston 50b and the transmission casing 5 to engage the brake discs 50a. A cylindrical stopper 8a is integrally formed with the pump cover 8, which is a stationary member, in an axially protruding manner in order to stop the axial end of the brake discs 50a when it is pushed by the piston 50b. Thus, a snap ring for stopping the end of the brake discs 50a can be omitted.

As shown in Fig. 4, the sun gear 41 has, at its intermediate portion, an inner splined portion 41d to be spline-connected with the outer splined flange portion 3a formed integrally with the input shaft 3. Further, the sun gear 41 has a cylindrical portion 41a, which is integrally formed at the front side (toward the engine) thereof in an axially protruding manner, so as to serve as clutch hub of the direct-coupling clutch 51. The outer toothed wall of this cylindrical portion 41a engages inner peripherals of the clutch discs 51a by spline connection. Furthermore, the sun gear 41 has, at the rear side thereof, a cylindrical bearing mounting portion 41b, whose outer periphery is formed with gear portion 41c to mesh with the pinion gear 43. The bearing mounting portion 45b of the carrier flange 45 and the bearing mounting portion 41b of the sun gear 41 are positioned opposing to each other in the radial direction in such a way that a ball bearing 57 is installed between these bearing mounting portions 45b and 41b. Namely, this ball bearing 57 is disposed radially inside of the pinion gear 43. In this embodiment, the axial length L₁ of the ball bearing 57 is longer than the axial length L₂ of the spline-connecting portion between the sun gear 41 and the input shaft 3. Because the center O of the ball bearing 57 substantially corresponds to the intermeshing center of the pinion gear 43 (the center of the length D) in axial direction, the intermeshing reacting force raised between the sun gear 41 and the pinion gear 43 hardly acts as the moment on the carrier 44 (45, 46). As a result of this center-correspondence and of the extended axial length S of the inner peripheral portion of the carrier flange 45, the carrier 44 can be further prevented from tilting.

Although the foregoing embodiment has exemplified the case in which the center O of the ball bearing 57 substantially corresponds to the intermeshing center of the pinion gear 43 in axial direction, those centers need not necessarily correspond to each other in axial direction, so long as the bail bearing 57 and the pinion gear 43 are positioned to overlap each other, at least partially, in the axial direction. In order to reduce the moment to act on the carrier 44 caused by the intermeshing reaction force of these gears, the center O of the ball bearing 57 may preferably be located axially within the range of length D of the pinion gear 43. Further, it is more preferable that the ball bearing 57 as a whole may be located within the range of length D of the pinion gear 43. Even when the axial length L₂ of the spline-connecting portion between the sun gear 41 and the input shaft 3 is short, the sun gear 41 can be prevented from tilting because the sun gear 41 is coupled to the carrier flange 45 via the ball bearing 57. As a result, the pinion gear 43 and the sun gear 41 can operate under an improved intermeshing condition, so that the gear noise and the abrasion can be effectively suppressed.

At the backside of the pump cover 8 (at a side nearer to the forward backward changeover device), a piston 51b having a transversely U-shaped section is arranged so as to engage the direct-coupling clutch 51. A thrust bearing 52 for allowing relative rotation between the piston 51b and the clutch discs 51a is arranged at the inside of the piston 51b opposing to the clutch discs 51a. Thus, the axial force caused by the piston 51b is effectively transmitted to the clutch discs 51a, while the piston 51b is prevented from being dragged by the clutch discs 51a of the direct-coupling clutch 51. Further, because the side wall of the carrier rim 46 is positioned behind the clutch discs 51a, the axial end of the clutch discs 51a is stopped by this carrier rim 46 when the clutch discs 51a are pressed by the piston 51b, enabling to omit a snap ring or other counteraction members.

A bearing retainer 53 for supporting the thrust bearing 52 extends outwardly in radial direction along the inner side surface of the piston 51b, in such a way that the end of outer periphery of this bearing retainer 53 is stopped by an end portion of a spring retainer 54. Accordingly, the bearing retainer 53 is kept stable at the position along the inner surface of the piston 51b. The spring retainer 54 extends outwardly in radial direction along the side surface of the piston 51b for the direct-coupling clutch, in such a way that a return spring 55 is disposed between the outer end of this spring retainer 54 and the piston 50b for the reverse brake. This spring 55 serves both as the return spring of the piston 51b for the direct-coupling clutch and as the return spring of the piston 50b for the reverse brake. A proper number of springs 55 are arranged around the outer peripheries of the brake discs 50a of the reverse brake 50. Because the reverse brake 50 and the direct-coupling clutch 51 do not go into action simultaneously, one kind of springs 55 can commonly serve as the return springs for both pistons. Although, in the foregoing embodiment, common springs 55 are used as the return springs for both of the reverse brake 50 and the direct-coupling clutch 51, individual return springs can be installed for the reverse brake 50 and the direct-coupling clutch 51 respectively, as a matter of course.

In the above-described continuously variable transmission, by applying the reverse brake 50 and disengaging the direct-coupling clutch 51, the driving rotation inputted from the torque converter 2 is transmitted to the driver pulley 11 in a reversed and decelerated manner. Then, the driving rotation is transmitted further from the driven pulley 21 to the output shafts 32 via the differential unit 30, so as to rotate the output shafts 32 in the same rotational direction as that of the engine rotation, resulting in a forward drive state. On the contrary, by engaging the direct-coupling clutch 51 and releasing the reverse brake 50, the input-side member (the sun gear 41) and the output-side member (the ring gear 42) of the planetary gear device 40 are directly coupled, so that the driving rotation inputted from the torque converter 2 is transmitted to the driver pulley 11 as it is. Then, the driving rotation is transmitted further from the driven pulley 21 to the output shafts 32 via the differential gear unit 30, so as to rotate the output shafts 32 in a direction reverse to that of the engine rotation, resulting in a backward drive state. In this way, a compact and triaxial continuously variable transmission can be obtained.

The scope of the present invention should not be limited to the above-described embodiment. The planetary gear device in accordance with the present invention should not be limited to the single-pinion type planetary gear device as shown in the foregoing embodiment, but can be applied to a double-pinion type planetary gear device. In case of the double-pinion type planetary gear device, two kinds of pinion gears intermeshing with each other are supported by a carrier, such that one of the pinion gears meshes with a ring gear and the other of the pinion gears meshes with a sun gear. The sun gear is spline-coupled to an input-side rotational member, whereas the carrier is spline-coupled to an output-side rotational member. In this case also, by installing a radial bearing between the sun gear and the carrier, relative position of the sun gear to the carrier becomes stable, so that the carrier can be prevented from tilting. For the same reason as described above, the center of the ball bearing should preferably be positioned in the vicinity of the intermeshing center of the pinion gear meshing with the sun gear. Further, the planetary gear device of the present invention can be applied not only to the continuously variable transmission, but also to a general automatic transmission.

The rotational shaft of the present invention is not limited to an input shaft serving as an input-side member of the planetary gear device, but it can also be an output shaft serving as an output-side member of the planetary gear device. Although the foregoing embodiment has exemplified the case in which the clutch hub 41a of the direct-coupling clutch 51 is integrally formed with the sun gear 41 at one end thereof, the clutch hub 41a may also be formed integrally with the input shaft 3. Further, although the carrier 44 consists of two parts, namely, the separate carrier flange 45 and carrier rim 46 are connected into the carrier 44, the carrier flange 45 and the carrier rim 46 may also be preformed as a single component.

## Claims

1. A planetary gear device (40) comprising a rotational shaft (3), a sun gear (41) connected to the rotational shaft (3), a carrier (44) supported on the rotational shaft (3), pinion gears (43) supported by the carrier (44) and a ring gear (42) meshing with the pinion gears (43), wherein
a first bearing mounting portion (41b) extending in the radial inner side of a gear portion (41c) meshing with the pinion gears (43) is formed integrally with the sun gear (41),
a second bearing mounting portion (45b) extending in the radial inner side of the pinion gears (43) and opposing to the first bearing mounting portion (41b) in the radial direction is formed integrally with the carrier (44), and
a radial bearing (57) is installed between the first bearing mounting portion (41b) and the second bearing mounting portion (45b) so as to be positioned in the radial inner side of the pinion gears (43),
**characterized in that**
the sun gear (41) is spline-connected to the rotational shaft (3),
the carrier (44) rotatably supported on the rotational shaft (3),
an inner splined portion (41d) to be spline-connected with an outer spline (3a) of the rotational shaft (3) is formed with the sun gear (41) at a position axially shifted from the gear portion (41c), and
the radial bearing (57) is operative to support the thrust force as well as the radial load.

2. The planetary gear device (40) according to claim 1, wherein
the radial bearing (57) is a ball bearing or a roller bearing.

3. The planetary gear device (40) according to claim 1 or 2, wherein
the center of the radial bearing (57) is located within the range of length of the pinion gear (43).

4. The planetary gear device (40) according to claim 1 or 2, wherein
the radial bearing (57) as a whole is located within the range of length of the pinion gear (43).

5. The planetary gear device (40) according to claim 1 or 2, wherein
the center of the radial bearing (57) is located at substantially the same position as the engagement center of the pinion gear (43) in the axial direction.

6. The planetary gear device (40) according to one of claims 1 to 5, wherein
the first bearing mounting portion (41b) is formed at one axial end portion of the sun gear (41),
a clutch hub (51) for supporting inner peripheries of clutch discs (51a) is formed at the other axial end portion of the sun gear (41), and
the inner splined portion (41d) is formed at the axial intermediate portion of the sun gear (41).

## Patentansprüche

1. Eine Planetenradvorrichtung (40), die eine Drehwelle (3), ein Sonnenrad (41), das mit der Drehwelle (3) verbunden ist, einen Träger (44), der auf der Drehwelle (3) getragen wird, Antriebskegelräder (43), die durch den Träger (44) getragen werden, und einen Zahnkranz (42), der mit den Antriebskegelrädern in Eingriff tritt, aufweist, wobei
ein erster Lagerbefestigungsabschnitt (41b), der sich in der Radialinnenseite eines Getrieberadabschnitts (41c) erstreckt, der mit den Antriebskegelrädern (43) ineinandergreift, einstückig mit dem Sonnenrad (41) gebildet ist,
ein zweiter Lagerbefestigungsabschnitt (45b), der sich in der Radialinnenseite der Antriebskegelräder (43) erstreckt und gegenüberliegend zu dem ersten Lagerbefestigungsabschnitt (41b) in der radialen Richtung ist, einstückig mit dem Träger (44) gebildet ist, und
ein Radiallager (57) zwischen dem ersten Lagerbefestigungsabschnitt (41b) und dem zweiten Lagerbefestigungsabschnitt (45b) installiert ist, um in der Radialinnenseite der Antriebskegelräder (43) positioniert zu sein,
**dadurch gekennzeichnet, dass**
das Sonnenrad (41) verzahnt mit der Drehwelle (3) verbunden ist,
der Träger (4) drehbar auf der Drehwelle (3) getragen ist,
ein innerer verzahnter Abschnitt (41d), der mit einer äußeren Verzahnung (3a) der Drehwelle (3) verzahnt verbunden werden soll, mit dem Sonnenrad (41) an einer Position axial verschoben von dem Getrieberadabschnitt (41c) gebildet ist, und
das Radiallager (57) wirksam ist, um die Schubkraft sowie die Radiallast zu tragen.

2. Die Planetenradvorrichtung (40) gemäß Anspruch 1, bei der
das Radiallager (57) ein Kugellager oder ein Rollenlager ist.

3. Die Planetenradvorrichtung (40) gemäß Anspruch 1 oder 2, bei der
die Mitte des Radiallagers (57) innerhalb des Bereichs der Länge des Antriebskegelrads (43) angeordnet ist.

4. Die Planetenradvorrichtung (40) gemäß Anspruch 1 oder 2, bei der
das Radiallager (57) als Ganzes innerhalb des Bereichs der Länge des Antriebskegelrads (43) angeordnet ist.

5. Die Planetenradvorrichtung (40) gemäß Anspruch 1 oder 2, bei der
die Mitte des Radiallagers (57) im Wesentlichen an derselben Position angeordnet ist wie die Eingriffsmitte des Antriebskegelrads (43) in der axialen Richtung.

6. Die Planetenradvorrichtung (40) gemäß einem der Ansprüche 1 bis 5, bei der
der erste Lagerbefestigungsabschnitt (41b) an einem axialen Endabschnitt des Sonnenrads (41) gebildet ist,
eine Kupplungsnabe (51) zum Tragen der Innenumfänge von Kupplungsscheiben (51a) an dem anderen axialen Endabschnitt des Sonnenrads (41) gebildet ist, und
der innere verzahnte Abschnitt (41d) an dem axialen Zwischenabschnitt des Sonnenrads (41) gebildet ist.

## Revendications

1. Dispositif de train planétaire (40) comprenant un arbre de rotation (3), un engrenage solaire (41) connecté à l'arbre de rotation (3), un support (44) supporté sur l'arbre de rotation (3), des pignons (43) supportés par le support (44) et une couronne dentée (42) engrenant les pignons (43), dans lequel
une première partie de montage de roulement (41b) s'étendant dans le côté intérieur radial d'une partie d'engrenage (41e) engrenant les pignons (43) est formée de manière solidaire avec l'engrenage solaire (41),
une deuxième partie de montage de roulement (45b) s'étendant dans le côté intérieur radial des pignons (43) et opposée à la première partie de montage de roulement (41b) dans la direction radiale est formée de manière solidaire avec le support (44), et
un roulement radial (57) est installé entre la première partie de montage de roulement (41b) et la deuxième partie de montage de roulement (45b) de manière à être positionné dans le côté intérieur radial des pignons (43),
**caractérisé par le fait que**
l'engrenage solaire (41) est connecté par clavette à l'arbre de rotation (3),
le support (44) est supporté en rotation sur l'arbre de rotation (3),
une partie clavetée intérieure (41d) à connecter par clavette par une clavette extérieure (3a) de l'arbre de rotation (3) est formée avec l'engrenage solaire (41) en une position décalée axialement par rapport à la partie d'engrenage (41c), et
le roulement radial (57) est opérationnel pour supporter la force de poussée ainsi que la charge radiale.

2. Dispositif de train planétaire (40) selon la revendication 1, dans lequel
le roulement radial (57) est un roulement à bille ou un roulement à rouleau.

3. Dispositif de train planétaire (40) selon la revendication 1 ou 2, dans lequel
le centre du roulement radial (57) se situe dans la plage de longueur du pignon (43).

4. Dispositif de train planétaire (40) selon la revendication 1 ou 2, dans lequel
le roulement radial (57) dans son ensemble se situe dans la plage de longueur du pignon (43).

5. Dispositif de train planétaire (40) selon la revendication 1 ou 2, dans lequel
le centre du roulement radial (57) se situe sensiblement à la même position que le centre de venue en prise du pignon (43) dans la direction axiale.

6. Dispositif de train planétaire (40) selon l'une des revendications 1 à 5, dans lequel
la première partie de montage de roulement (41b) est formée à une partie d'extrémité axiale de l'engrenage solaire (41),
une bague d'embrayage (51) destinée à supporter les pourtours intérieurs de disques d'embrayage (51a) est formée à l'autre partie d'extrémité axiale de l'engrenage solaire (41), et
la partie clavetée intérieure (41d) est formée à la partie intermédiaire axiale de l'engrenage solaire (41).
